# EUROPÄISCHE PATENTSCHRIFT

(11) **EP 1 362 272 B1**
(45) Veröffentlichungstag und Bekanntmachung des Hinweises auf die Patenterteilung: **23.07.2008**
(21) Anmeldenummer: 01971989.7
(22) Anmeldetag: 31.08.2001
(51) Int. Cl.: G06F 21/20

(54) **VERFAHREN UND ANORDNUNG FÜR EIN RECHTE-TICKET-SYSTEM ZUR ERHÖHUNG DER SICHERHEIT BEI DER ZUGANGSKONTROLLE ZU RECHNERRECOURCEN**
METHOD AND ARRANGEMENT FOR A RIGHTS TICKET SYSTEM FOR INCREASING SECURITY OF ACCESS CONTROL TO COMPUTER RESOURCES
PROCEDE ET CONFIGURATION POUR UN SYSTEME DE TICKETS D'HABILITATION VISANT A AUGMENTER LA SECURITE LORS DU CONTROLE D'ACCES A DES RESSOURCES INFORMATIQUES

(30) Priorität: 07.11.2000 DE 10056135
(43) Veröffentlichungstag der Anmeldung: 19.11.2003
(73) Patentinhaber: Deutsche Telekom AG, 53113 Bonn (DE)
(72) Erfinder: RUTZ, Roland, 12489 Berlin (DE); COERDT, Reinhardt, 16341 Zepernick (DE); WERNER, Peter, 10317 Berlin (DE)
(86) Internationale Anmeldenummer: PCT/EP2001/010069
(87) Internationale Veröffentlichungsnummer: WO 2002/039236

(56) Entgegenhaltungen:
- US-A- 4 430 728
- US-A- 5 987 134
- US-A- 6 041 412

## Beschreibung

Die Erfindung bezieht sich auf ein Verfahren und eine Anordnung für ein Rechte-Ticket-System (RTS), mit dem die Sicherheit bei der Zugangskontrolle zu einem Rechner, einer Gruppe von Rechnern bzw. einer Applikation erhöht werden soll.

Zur Zeit werden Chipkarten immer häufiger zur Speicherung von persönlichen Informationen eingesetzt. Das liegt darin begründet, dass diese Informationen durch die verwendete Chipkartentechnologie sicherer gespeichert werden können als auf herkömmlichen Computersystemen. Dabei werden jedoch in zunehmendem Maße neben Benutzerpaßwörtern auch kritische Informationen über den Rechner auf der Chipkarte gespeichert.

Die US-A-5,987,134 offenbart eine Vorrichtung und ein Verfahren zur Authentifizierung der Zugangsrechte eines Benutzers zu Ressourcen. Hierzu ist eine Nachweiseinrichtung (Proving Device) vorgesehen, in der ein Zugangsticket eingesetzt werden kann. Das Zugangsticket enthält Proof-Support-Daten, welche die aktuellen Zugangsrechte eines Benutzers darstellen. Weiterhin ist eine Verifikationseinrichtung vorgesehen, in der sogenannte Challenging-Daten hinterlegt sind. Darüber hinaus sind in der Nachweiseinrichtung eindeutige

Identifizierungsinformationen des Benutzers hinterlegt. Aus den Challenging-Daten, den Proof-Support-Daten und den eindeutigen Identifizierungsinformationen des Benutzers wird in der Nachweiseinrichtung eine Antwort erzeugt, die in der Verifikationseinrichtung überprüft wird.

Beispielsweise ist es aus US 5448045 und US 05892902 bekannt, Teile des Bootprogrammes eines Rechners auf die Chipkarte auszulagern. Mit dieser Lösung sollen Virusinfektionen des Bootprogrammes verhindert werden.

Dazu präsentiert die Chipkarte (Smartcard) nach der Verifikation des Benutzers (PIN Eingabe) dem Rechner ein vorher vereinbartes gemeinsames Geheimnis, so dass der Rechner die ausgelagerten Informationen von der Smartcard einlesen kann. Das gemeinsame Geheimnis können Signaturen für ausführbare Programme oder kryptografische Schlüssel sein.

Eine weitere Lösung ist aus Hamann, Ernst-Michael (1999): Einsatz von frei definierbaren Objekten auf einer Signaturkarte im Internet. In: Horster, Patrick (Hrsg.): Sicherheitsinfrastrukturen: Grundlagen, Realisierungen, Rechtliche Aspekte, Anwendungen.Vieweg, S. 257-271 bekannt.

Bei dieser Signaturkartenanwendung werden frei definierbare Datenobjekte auf einer Javacard gespeichert und über Standardschnittstellen (RSA PKCS#11 Version 2.01 (Cryptoki); Microsoft Crypto API (CAPI); Common Data Security Architecture (CDSA) ) zur Verfügung gestellt. Diese Datenobjekte können zusammen mit der Kartenseriennummer signiert und auf der Chipkarte abgelegt werden. Die das Objekt später benutzende Anwendung kann dann mit dem öffentlichen Schlüssel des Erstellers der Javacard und der Kartenseriennummer prüfen, ob das Objekt aus der betreffenden Javacard stammt und nicht von einer anderen Karte kopiert wurde. Dies erlaubt die Speicherung eines Tickets auf der Signaturkarte.

Bei dieser Lösung wird das gemeinsame Geheimnis zwischen Chipkarte und Rechner auf dem Rechner selbst gespeichert.

Bei einer Kompromittierung des Rechners ist das gemeinsame Geheimnis jedoch der Öffentlichkeit bekannt. Das oben beschriebene Verfahren beinhaltet somit Sicherheitsrisiken.

Das erfindungsgemäße Verfahren ist auf die Erhöhung der Sicherheit bei der Zugangskontrolle zu einem Rechner, einer Gruppe von Rechnern bzw. einer Applikation ausgerichtet. Sicherheitsrisiken durch einen unerlaubten Zugriff bzw. durch den Zugriff von nichtberechtigten Personen sollen dabei gegenüber den bekannten Lösungen wesentlich minimiert werden.

Das Grundprinzip der Lösung besteht in der Generierung eines signierten elektronischen Tickets in einer sicheren Umgebung durch eine besonders vertrauenswürdige Person. Das Ticket soll dem Benutzer den kontrollierten Zugang zu einem Rechner, einer Gruppe von Rechnern bzw. zu einer im Rahmen des Tickets festgelegten Anwendung ermöglichen. Host-Cards und User-Cards werden in einer sicheren Umgebung erzeugt, wobei auf den User-Cards später die Tickets gespeichert werden. Jedem Rechner, der in das Rechte-Ticket-System (RTS-System) einbezogen ist, und nachfolgend mit RTS-Rechner bezeichnet wird, ist eine Host-Card zugeordnet.

Auf der Host-Card sind wichtige geheime Schlüssel gespeichert, die zur Verifikation der dem RTS-Rechner vorgelegten User-Card und dem auf der User-Card gespeicherten Ticket benötigt werden. Die Host-Cards sind so in den RTS-Rechnern angeordnet, dass eine Manipulation von außen nicht möglich ist.

Der Zugriff des Benutzers auf einen Rechner des RTS-Systems bzw. auf eine durch einen RTS-Rechner angebotene Applikation wird erst nach der Verifikation der Host-Card, der User-Card und des auf der User-Card angeordneten Tickets freigegeben, wobei der Zugriff auf das Ticket der User-Card nur über ein Geheimnis der Host-Card erfolgen kann. Die Host-Card stellt somit gegenüber den bekannten Lösungen einen schwer manipulierbaren Datenspeicher dar, da alle wichtigen Informationen entweder nicht oder nur nach PIN Verifikation geändert werden können.

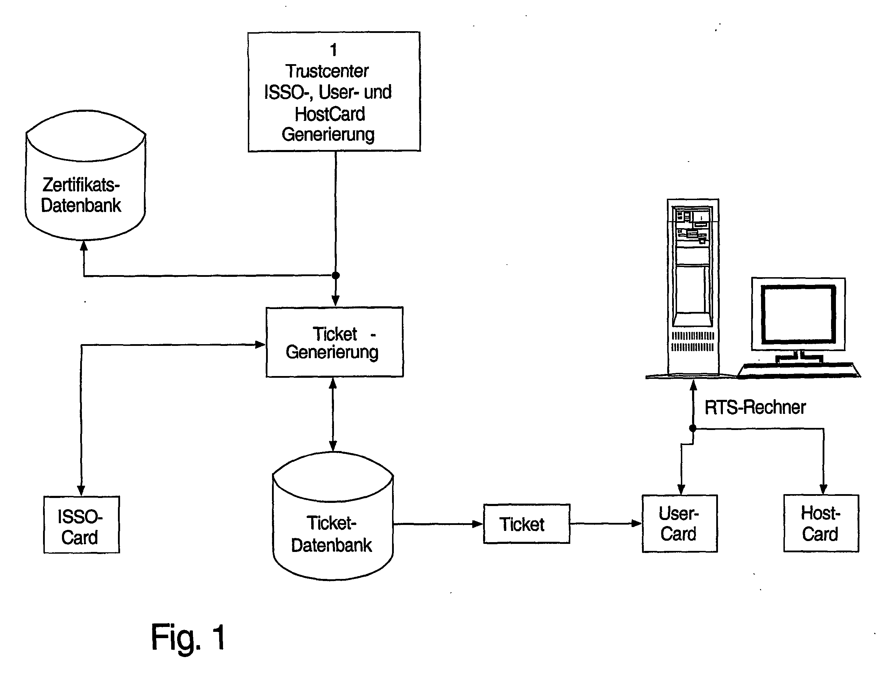

Die Prinziplösung des erfindungsgemäßen Verfahrens ist in Fig. 1 anhand eines Blockschaltbildes dargestellt. Vom Trustcenter werden Chipkarten für das Rechte-Ticket-System erzeugt und ausgegeben. Diese Chipkarten enthalten neben anderen Applikationen (z.B. Signaturfunktion, Gleitzeitanwendungen, etc.) die RTS Applikation. Basisinformationen wie Verzeichnisse und geheime Schlüsselfiles werden im evaluierten Trustcenter auf die Chipkarte gebracht. Die User-Card ist eine vom Trustcenter personalisierte Chipkarte, die Host-Card ist nur eine vorpersonalisierte Chipkarte und wird später einem RTS-Rechner zugeordnet.

Die technische Lösung basiert auf dem nachfolgend beschriebenen Zusammenspiel eines Tickets mit einer rechnergebundenen Host-Card.

Das Ticket wird von einem besonders vertrauenswürdigen Sicherheitsadministrator ISSO an einem sicheren Administrationrechner RTS Admin mit Hilfe der ISSO Chipkarte erstellt. Die ISSO Chipkarte ist die User-Card des Sicherheitsadministrators ISSO. Im Ticket werden alle Informationen über die Rechte des Benutzers innerhalb eines bestimmtes Rechners, einer Gruppe von Rechnern bzw. einer Applikation gespeichert. Die Personalisierung eines Rechners bzw. einer Rechnergruppe erfolgt über einen frei wählbaren Namen (Aliasnamen). Die Rechte des Benutzers werden in einem Ticket gespeichert und zusammen mit dem öffentlichen Schlüssel des betreffenden Benutzers und dem Aliasnamen des betreffenden RTS-Rechners signiert, wodurch es zu einem personalisierten Ticket wird.

Dadurch ist das Ticket nur für diesen Benutzer und nur für den RTS-Rechner bzw. die RTS-Rechnergruppe mit dem betreffenden Aliasnamen gültig. Zum Signieren des Tickets wird der private Schlüssel des für den RTS-Rechner zuständigen Sicherheitsadministrators ISSO verwendet. Dieser private Schlüssel befindet sich auf der ISSO Chipkarte. Durch die Signatur können Manipulationen am Ticket beim Verifizieren durch den RTS-Rechner erkannt und die Nutzung der Ressourcen des RTS-Rechners verhindert werden. Die Erzeugung des Tickets findet auf einem besonders sicheren Rechner, vorzugsweise in einer sicheren Umgebung, statt.

Das vom Sicherheitsadministrator ISSO erzeugte Ticket wird mit dem öffentlichen Schlüssel des Sicherheitsadministrators ISSO und dem öffentlichen Schlüssel des Nutzers, für den das Tickets erzeugt wurde, verschlüsselt. Zusätzlich kann das Ticket noch mit einer weiteren Karte (ISSO Backupkarte) verschlüsselt werden. Das verschlüsselte Ticket wird in einer Ticket-Datenbank gespeichert, um bei Verlust oder Zerstörung einer User- oder Host-Card basierend auf den vorhandenen Nutzerdaten ein neues Ticket zu erstellen. Weiterhin dient die Ticket-Datenbank als Verzeichnis über alle erzeugten Tickets.

Dem Benutzer wird das für ihn erzeugte und verschlüsselte Ticket auf elektronischem Weg (e-mail) oder per Diskette zugesendet. Nach Erhalt des Tickets entschlüsselt der Benutzer das Ticket auf einem sicheren Rechner mit dem privaten Schlüssel seiner User-Card, verifiziert die Ticketdaten und speichert diese in seiner User-Card, die er vorher auf sicherem Wege vom Trust-Center erhalten hat.

Voraussetzung zur Generierung eines Tickets ist eine Host-Card. Sie ist eine vorpersonalisierte Chipkarte, die an jedem Rechner als hochsicherer Datenspeicher verwendet und durch den ISSO initialisiert wird.

Zu jedem Ticket, dass für einen RTS-Rechner erzeugt wurde, existiert ein zugehöriger Ticketkey. Dieser Ticketkey ist ein gemeinsames Geheimnis von Host-Card und User-Card, das bei der Generierung der Host-Card erzeugt wird. Es dient dem Schutz der in der User-Card gespeicherten Tickets vor unerlaubtem Lesen durch fremde Rechner. Zum Auslesen des für den RTS Rechner gültigen Tickets von der User-Card muss der RTS Rechner der User-Card nachweisen, dass er im Besitz des gleichen Ticketkeys (gespeichert auf der Host-Card) ist.

Bei der Anmeldung an einen RTS Rechner oder dem Zugang zu einer Ressource auf einem RTS Rechner muss der Nutzer dem System eine User-Card vorweisen, auf der ein gültiges Ticket gespeichert ist. Dazu muss er seine User-Card in den Kartenleser des RTS Rechners einstecken und sich mit seiner persönlichen Identifikationsnummer (PIN) authentifizieren. Das System prüft die Signatur des Tickets unter Nutzung des öffentlichen Schlüssels des Sicherheitsadministrators und gibt bei erfolgreicher Verifikation den Zugang zum System bzw. zur Ressource frei.

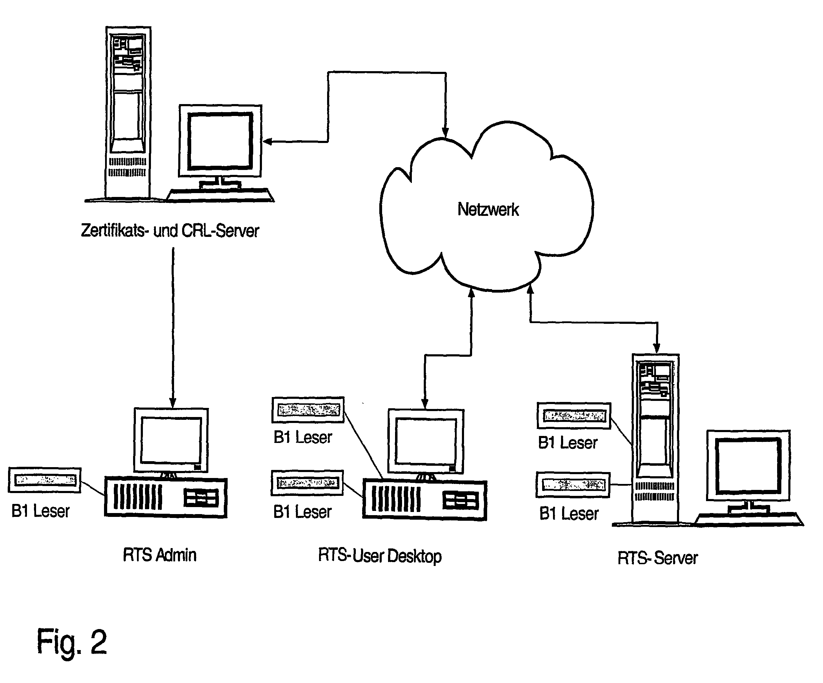

In Fig 2 wird die erfindungsgemäße Lösung anhand eines Ausführungsbeispiels für die Inanspruchnahme eines Servers über ein Netzwerk dargestellt. Am RTS Admin Rechner werden für den Server Tickets erstellt, welche die Zugangsrechte (in ihrem Umfang und ihrer zeitlichen Begrenzung) zum Server selbst bzw. zu Applikationen des Servers enthalten. Am User Desktop wird das Ticket für den Server dann in die Chipkarte des Benutzers geladen. Nun kann sich der Benutzer mit diesem Ticket am Server anmelden.

Für höchste Sicherheitsanforderungen darf der Zugang zum User Desktop selbst nur mit einem Ticket erfolgen. Deshalb muss der Benutzer für diesen Rechner bereits ein Ticket in die User-Card geladen haben. Die Erstinitialisierung einer User-Card für den Zugang zu einem lokalen User Desktop erfolgt in der Regel durch den lokalen Sicherheitsadministrator am RTS Admin Rechner. Der Zugang zu einem lokalen RTS Rechner ist damit nur mit einem gültigen Ticket möglich.

Der Zugang zu einem RTS-Rechner ist jedoch auch über einen lokalen Rechner möglich, der nicht über einen zweiten Kartenleser und damit auch nicht über eine Host-Card verfügt. Bei dieser Lösung müssen jedoch im Gegensatz zu einer Lösung, die ausschließlich auf RTS-Rechnern basiert, Abstriche am Sicherheitsstandard hingenommen werden. Diese Abstriche beschränken sich jedoch ausschließlich auf den lokalen Zugangsrechner, da der Zugriff auf diesen Rechner nicht über ein Ticket gesichert ist. Der Zugriff von diesem lokalen Rechner zu einem RTS-Rechner ist jedoch nur über ein Ticket möglich, so dass hier die Sicherheit in vollem Umfange wieder gewährleistet ist.

In einer möglichen Ausführungsform wird das Rechte-Ticket-System zur Auslagerung von UNIX Benutzerrechten auf die User-Card verwendet. Diese bisher auf der Festplatte des Rechnersystems gespeicherten Rechte sind damit für einen potentiellen Angreifer schwerer zu manipulieren, da sie sich kryptografisch geschützt in der User-Card des Nutzers befinden.

Bei den bisher bekannten Lösungen werden die in einer User-Card gespeicherte Benutzerrechte dem Rechner zur Verifikation übergeben und dann mit den auf dem Rechner gespeicherten Benutzerrechten verglichen (z.B. Passwort einer Applikation). Das Rechte-Ticket-System hingegen erlaubt den Zugang zum RTS-Rechner nur nach Verifikation des Tickets unter Zuhilfenahme der Host-Card, d.h. es findet kein Vergleich zwischen den im Ticket enthaltenen Daten mit auf dem RTS-Rechner gespeicherten Daten statt. Die Benutzerrechte werden dem RTS-Rechner während des Anmeldevorganges übergeben und sind nur solange auf dem RTS-Rechner vorhanden, solange der Benutzer am RTS-Rechner angemeldet ist. Deshalb ist es auch nicht möglich, bei Abwesenheit des Benutzers dessen Rechte auszuspähen.

Jedem RTS-Rechner, an dem der Benutzer sich mit seinem Ticket lokal anmelden kann, sind mindestens zwei Chipkartenleser zugeordnet. Der erste Chipkartenleser dient der Aufnahme der User-Card des Benutzers. Der zweite Chipkartenleser ist für die Aufnahme der Host-Card konfiguriert.

Bei einer auf einem Ticket basierenden Anmeldung von einem RTS-User-Rechner auf einen entfernten RTS-Rechner (Server) ist am RTS-User-Rechner ein Chipkartenleser für die User-Card und am entfernten RTS-Rechner ein Chipkartenleser für die Host-Card angeordnet.

Durch die Host-Card wird jeder RTS-Rechner mit einer Identität versehen, die nur durch physikalisches Wechseln der Host-Card geändert werden kann. Als zusätzlicher Schutzmechanismus gegen ein unauthorisiertes Austauschen der Host-Card wird die Kartenseriennummer der Host-Card in die Trusted Computing Base des RTS-Rechners aufgenommen. Der für die Host-Card konfigurierte Chipkartenleser ist so im betreffenden RTS-Rechner installiert ist, dass die Host-Card nur nach Öffnen des Rechnergehäuses entnommen werden kann. Eine weitere zusätzliche Sicherheitsmaßnahme besteht darin, die Host-Card fest in den Chipkartenleser für die Host-Card zu integrieren, so dass die Host-Card nur nach Öffnen des Chipkartenlesers entnommen werden kann.

### Bezugszeichenaufstellung

| | |
|---|---|
| ISSO | Sicherheitsadministrator (Information System Security Officer) |
| ISSO Chipkarte: | persönliche Chipkarte des Sicherheitsadministrators |
| User-Card: | Chipkarte eines Benutzers |
| Host-Card: | Chipkarte für einen Rechner, die die Identität des Rechners im Rechte-Ticket-System definiert und Informationen zur Verifizierung eines für diesen Rechner ausgestellten Tickets enthält. |
| RTS Admin: | Rechnersystem, an dem die Tickets für verschiedene Rechner vom ISSO erzeugt werden. |
| RTS Rechner: | Rechner, der für das Rechte-Ticket-System konfiguriert wurde |

## Patentansprüche

1. Verfahren zur Erhöhung der Sicherheit bei der Zugangskontrolle zu wenigstens einem RTS-Rechner oder einer Applikation eines Rechte-Ticket-Systems, **dadurch gekennzeichnet, dass** in einer sicheren Umgebung von einer besonders vertrauenswürdigen Person
a) für einen RTS-Rechner eine Host-Card mit für diesen Rechner spezifischen Identitätsinformationen zur späteren Verifikation mindestes eines Tickets erstellt wird, dass
b) ein personalisierter Datensatz in Form eines signierten Tickets erzeugt wird, welches sowohl Informationen über die Rechte eines bestimmungsgemäßen Benutzers für mindestens einen RTS-Rechner oder über Ressourcen des RTS-Rechners, als auch Identitätsinformationen der bereits für den RTS-Rechner erstellten Host-Card enthält, wobei zum Schutz des Tickets vor unerlaubtem Auslesen ein gemeinsames Geheimnis zwischen der Host-Card und dem dieser Host-Card zugeordneten Ticket etabliert wird, dass
das Ticket mit einem öffentlichen Schlüssel der besonders vertrauenswürdigen Person und einem öffentlichen Schlüssel des bestimmungsgemäßen Benutzers verschlüsselt wird,
dass das signierte Ticket nach der Zustellung an den bestimmungsgemäßen Benutzer mit dem privaten Schlüssel einer User-Card des bestimmungsgemäßen Benutzers entschlüsselt, verifiziert und in der User-Card gespeichert wird, und dass der Zugriff zum Auslesen des Tickets aus der User-Card durch den RTS-Rechner erst nach der wechselseitigen Authentikation über das gemeinsame Geheimnis zwischen der User-Card des bestimmungsgemäßen Benutzers und der Host-Card des wenigstens einen betreffenden RTS-Rechners freigegeben wird.

2. Verfahren nach Anspruch 1, **dadurch gekennzeichnet, dass** das gemeinsame Geheimnis als symmetrischer Schlüssel ausgebildet ist und in Form eines Ticketkeys bei der Erzeugung der Host-Card generiert wird,
dass das Ticket und der Ticketkey nach der Zusendung oder Zustellung vom bestimmungsgemäßen Benutzer in einem separaten Speicher der User-Card gespeichert werden, und dass nur nach erfolgreicher Verifikation des gemeinsamen Ticketkeys zwischen dem Ticket des Benutzers und der Host-Card des betreffenden RTS-Rechners das Ticket durch den RTS-Rechner von der User-Card gelesen werden kann.

3. Verfahren nach Anspruch 1, **dadurch gekennzeichnet, dass** der Benutzer sich bei einer Anmeldung an dem RTS-Rechner zusätzlich mit der auf seiner User-Card gespeicherten PIN identifizieren muß.

4. Verfahren nach Anspruch 1, **dadurch gekennzeichnet, dass** die Erzeugung der Host-Card und der der Host-Card zugeordneten Tickets vorzugsweise auf einem Administrationsrechner (Admin) in einer sicheren Umgebung durch die für den RTS-Rechner zuständige besonders vertrauenswürdigen Person (ISSO) unter Verwendung ihres privaten Schlüssels erfolgt, und dass die erzeugten Tickets in einer Ticket-Datenbank des Administrationsrechners gespeichert werden.

5. Verfahren nach Anspruch 1, **dadurch gekennzeichnet,**
**dass** dem Benutzer das für ihn erzeugte Ticket auf elektronischem Weg zugestellt wird.

6. Verfahren nach Anspruch 1, **dadurch gekennzeichnet, dass** das von
der besonders vertrauenswürdigen Person erzeugte Ticket einerseits verschlüsselt in einer Ticket-Datenbank eines Administrationsrechners gespeichert und andererseits dem Benutzer verschlüsselt zugesendet wird.

7. Verfahren nach Anspruch 1, **dadurch gekennzeichnet,**
**dass** die Zuordnung bzw. Identifikation eines RTS-Rechners bzw. einer Gruppe von RTS-Rechnern zu den Tickets über Aliasnamen vorgenommen wird, wobei einer Gruppe von RTS-Rechnern ein identischer Aliasname zugeordnet wird.

8. Anordnung zur Erhöhung der Sicherheit bei der Zugangskontrolle zu wenigstens einem RTS-Rechner oder einer Applikation eines Rechte-Ticket-Systems,
**dadurch gekennzeichnet, dass**
wenigstens einem RTS-Rechner, der als Zugangsrechner konfiguriert ist, so dass sich ein Benutzer mit einem Ticket lokal anmelden kann, eine Host-Card zugeordnet ist, auf der für den jeweiligen RTS-Rechner spezifische Identitätsinformationen zur Verifikation eines signierten Tickets und ein gemeinsames Geheimnis gespeichert sind, wobei das signierte Ticket aus einem personalisierten Datensatz erstellt worden ist und sowohl Informationen über die Rechte des Benutzers für den mindestens einen RTS-Rechner oder über Ressourcen des RTS-Rechners als auch Identitätsinformationen der bereits für den RTS-Rechner erstellten Host-Card enthält und dem Ticket das gemeinsame Geheimnis zugeordnet ist, wobei das signierte Ticket auf einer User-Card des Benutzers gespeichert ist, dass
dem RTS-Rechner mindestens zwei Chipkartenleser zugeordnet sind, wobei der erste Chipkartenleser für die Aufnahme der User-Card des Benutzers und der zweite Chipkartenleser für die Aufnahme der Host-Card konfiguriert ist, und dass
eine Einrichtung vorgesehen ist, die erst nach der wechselseitigen Authentikation über das gemeinsame Geheimnis zwischen der User-Card des Benutzers und der Host-Card den Zugriff zum Auslesen des Tickets aus der User-Card freigibt.

9. Anordnung nach Anspruch 8, **dadurch gekennzeichnet, dass** bei einer Anmeldung von einem nicht als RTS-Rechner konfigurierten User-Rechner auf einen entfernten RTS-Rechner (Server) am User-Rechner nur ein Chipkartenleser für die User-Card angeordnet ist.

10. Anordnung nach Anspruch 8, **dadurch gekennzeichnet, dass** der für die Host-Card konfigurierte Chipkartenleser so im betreffenden RTS-Rechner installiert ist, dass die Host-Card nur nach Öffnen des Rechnergehäuses entnommen werden kann.

11. Anordnung nach Anspruch 8 und 10, **dadurch gekennzeichnet, dass** die Host-Card fest in den Chipkartenleser für die Host-Card integriert ist, so dass die Host-Card nur nach Öffnen des Chipkartenlesers entnommen werden kann.

## Claims

1. A method for increasing security in controlling access to at least one RTS computer or an application of a rights ticket system,
wherein a particularly trustworthy person in a secure environment
a) creates a host card for an RTS computer containing identity information specific to this computer for later verification of at least one ticket;
b) generates a personalized data record in the form of a signed ticket, which contains information about the rights of a designated user for at least one RTS computer or about resources of the RTS computer, as well as identity information of the host card already created for the RTS computer, a shared secret being established between the host card and the ticket assigned to this host card for the purpose of preventing unauthorized reading of the ticket;
encrypts the ticket with a public key of the particularly trustworthy person and a public key of the designated user;
decrypts the signed ticket after delivery to the designated user via the private key of a user card of the designated user, verifies the signed ticket and stores it in the user card; enables access for reading the ticket from the user card by the RTS computer only after mutual authentication has been carried out via the shared secret between the user card of the designated user and the host card of the at least one relevant RTS computer.

2. The method as recited in Claim 1, wherein the shared secret is designed as a symmetrical key and generated in the form of a ticket key when the host card is created; the ticket and the ticket key are stored in a separate memory of the user card by the designated user after being sent or delivered; and the ticket is readable from the user card by the RTS computer only after the shared ticket key between the user's ticket and the host card of the relevant RTS computer has been successfully verified.

3. The method as recited in Claim 1, wherein the user must additionally identify himself by the PIN stored on his user card when logging into the RTS computer.

4. The method as recited in Claim 1, wherein the host card and the tickets assigned to the host card are preferably created on an administration computer (admin) in a secure environment by the particularly trustworthy person responsible for the RTS computer (ISSO), using his private key; and the generated tickets are stored in a ticket database on the administration computer.

5. The method as recited in Claim 1, wherein the ticket created for the user is delivered to him electronically.

6. The method as recited in Claim 1, wherein the ticket generated by the particularly trustworthy person is, on the one hand, stored in a ticket database on an administration computer and, on the other hand, delivered to the user in encrypted form.

7. The method as recited in Claim 1, wherein an RTS computer or a group of RTS computers is/are assigned to or identified by the tickets via aliases, a group of RTS computers being assigned an identical alias.

8. A system for increasing security in controlling access to at least one RTS computer or an application of a rights ticket system,
wherein at least one RTS computer, which is configured as the access computer in such a way that a user is able to log in locally via a ticket, is assigned a host card on which is stored identity information specific to the relevant RTS computer for verifying a signed ticket, and on which a shared secret is also stored, the signed ticked having been generated from a personalized data record and containing information about the user's rights for the at least one RTS computer or about resources of the RTS computer as well as identity information of the host card created for the RTS computer, and the shared secret being assigned to the ticket; the signed ticket being stored on a user card of the user; at least two chip card readers being assigned to the RTS computer; the first chip card reader being configured to accommodate the user card of the user and the second chip card reader for accommodating the host card; and
a device is provided which enables access for reading the ticket from the user card only after mutual authentication has been carried out via the shared secret between the user card of the user and the host card.

9. The system as recited in Claim 8, wherein only one chip card reader is provided for the user card at the user computer when logging in from a user computer not configured as an RTS computer to a remote RTS computer (server).

10. The system as recited in Claim 8, wherein the chip card reader configured for the host card is installed in the relevant RTS computer in such a way that the host card is removable only after the computer case has been opened.

11. The system as recited in Claims 8 and 10, wherein the host card is permanently integrated into the chip card reader for the host card so that the host card is removable only after the chip card reader has been opened.

## Revendications

1. Procédé visant à augmenter la sécurité lors du contrôle d'accès à au moins un ordinateur RTS ou à une application d'un système de tickets d'habilitation, **caractérisé en ce que**, dans un environnement sécurisé d'une personne particulièrement digne de confiance,
a) pour un ordinateur RTS, une carte hôte comportant des informations d'identité spécifiques à cet ordinateur, destinée à la vérification ultérieure d'au moins un ticket est créée, **en ce que**
b) un ensemble de données personnalisées sous la forme d'un ticket signé est généré qui contient aussi bien des informations relatives à l'habilitation d'un utilisateur conforme pour au moins un ordinateur RTS ou relatives à des ressources de l'ordinateur RTS que des informations d'identité de la carte hôte déjà créée pour l'ordinateur RTS, un secret commun entre la carte hôte et le ticket associé à ladite carte hôte étant établi pour empêcher la lecture non autorisée du ticket, **en ce que**
le ticket est crypté à l'aide d'une clé publique de la personne particulièrement digne de confiance et d'une clé publique de l'utilisateur conforme,
**en ce que**, après la notification à l'utilisateur conforme, le ticket signé est décrypté à l'aide de la clé privée d'une carte utilisateur de l'utilisateur autorisé, vérifié et enregistré dans la carte utilisateur, et **en ce que** l'accès pour la lecture du ticket de la carte utilisateur n'est autorisé par l'ordinateur RTS qu'après l'authentification réciproque moyennant le secret commun entre la carte utilisateur de l'utilisateur conforme et la carte hôte d'au moins cet ordinateur RTS concerné.

2. Procédé selon la revendication 1, **caractérisé en ce que** le secret commun est conçu comme clé symétrique et généré sous la forme d'une clé de ticket lors de la création de la carte hôte, **en ce que**, après l'envoi ou la notification, le ticket et la clé de ticket sont enregistrés dans une mémoire séparée de la carte utilisateur par l'utilisateur conforme, et **en ce que** le ticket ne peut être lu sur la carte utilisateur par l'ordinateur RTS qu'après vérification réussie de la clé de ticket commune entre le ticket de l'utilisateur et la carte hôte de l'ordinateur RTS concerné.

3. Procédé selon la revendication 1, **caractérisé en ce que**, lors d'une connexion à l'ordinateur RTS, l'utilisateur doit en plus s'identifier moyennant son PIN mémorisé sur sa carte utilisateur.

4. Procédé selon la revendication 1, **caractérisé en ce que** la création de la carte hôte et des tickets associés à la carte hôte s'effectue de préférence sur un ordinateur d'administration (Admin) dans un environnement sécurisé par la personne (ISSO) particulièrement digne de confiance compétente pour l'ordinateur RTS en utilisant sa clé privée, et **en ce que** les tickets générés sont enregistrés dans une base de données de tickets de l'ordinateur d'administration.

5. Procédé selon la revendication 1, **caractérisé en ce que** le ticket généré pour l'utilisateur est notifié à celui-ci par voie électronique.

6. Procédé selon la revendication 1, **caractérisé en ce que** le ticket généré par la personne particulièrement digne de confiance est enregistré de manière cryptée dans une base de données de tickets d'un ordinateur d'administration d'une part, et envoyé à l'utilisateur de manière cryptée d'autre part.

7. Procédé selon la revendication 1, **caractérisé en ce que** l'association ou l'identification d'un ordinateur RTS ou d'un groupe d'ordinateurs RTS par rapport aux tickets s'effectue moyennant des noms d'alias, un nom d'alias identique étant affecté à un groupe d'ordinateurs RTS.

8. Ensemble visant à augmenter la sécurité lors du contrôle d'accès à au moins un ordinateur RTS ou à une application d'un système de tickets d'habilitation, **caractérisé en ce qu'**une carte hôte sur laquelle sont enregistrées des informations d'identité spécifiques à l'ordinateur RTS respectif pour vérifier un ticket signé et un secret commun, est associée à au moins un ordinateur RTS configuré comme ordinateur d'accès permettant à un utilisateur de se connecter localement avec un ticket, le ticket signé ayant été généré à partir d'un ensemble de données personnalisées et contenant aussi bien des informations relatives à l'habilitation de l'utilisateur pour au moins cet ordinateur RTS ou relatives à des ressources de l'ordinateur RTS, que des informations d'identité de la carte hôte déjà créée pour l'ordinateur RTS et le secret commun étant associé au ticket, le ticket signé étant enregistré sur une carte utilisateur de l'utilisateur, **en ce qu'**au moins deux lecteurs de cartes à puce sont associés à l'ordinateur RTS, le premier lecteur de cartes à puce étant configuré pour recevoir la carte utilisateur de l'utilisateur et le second lecteur de cartes à puce étant configuré pour recevoir la carte hôte, et **en ce qu'**un équipement est prévu qui n'autorise l'accès à la lecture du ticket sur la carte utilisateur qu'après authentification réciproque moyennant le secret commun entre la carte utilisateur de l'utilisateur et la carte hôte.

9. Ensemble selon la revendication 8, **caractérisé en ce que**, lors d'une connexion à un ordinateur RTS distant (Server) par un ordinateur utilisateur non configuré comme ordinateur RTS, seul un lecteur de cartes à puce est disposé pour la carte utilisateur sur l'ordinateur utilisateur.

10. Ensemble selon la revendication 8, **caractérisé en ce que** le lecteur de cartes à puce configuré pour la carte hôte est installé dans l'ordinateur RTS concerné de manière que la carte hôte ne puisse être retirée qu'après ouverture du boîtier de l'ordinateur.

11. Ensemble selon les revendications 8 et 10, **caractérisé en ce que** la carte hôte est intégrée à demeure dans le lecteur de cartes à puce pour la carte hôte de manière que la carte hôte ne puisse être retirée qu'après ouverture du lecteur de cartes à puce.
